(19) Europäisches Patentamt
European Patent Office
Office européen des brevets

(11) **EP 2 484 699 B1**

(12) **EUROPEAN PATENT SPECIFICATION**

(45) Date of publication and mention
of the grant of the patent:
**27.04.2016 Bulletin 2016/17**

(21) Application number: **10818740.2**

(22) Date of filing: **16.09.2010**

(51) Int Cl.:
**C08B 30/18** (2006.01)

(86) International application number:
**PCT/JP2010/066052**

(87) International publication number:
**WO 2011/037065 (31.03.2011 Gazette 2011/13)**

(54) **ACTIVE ESTERIFIED POLYSACCHARIDE AND METHOD FOR PRODUCING SAME**

AKTIV VERESTERTES POLYSACCHARID UND VERFAHREN ZU SEINER HERSTELLUNG

POLYSACCHARIDE ESTÉRIFIÉ ACTIF ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **28.09.2009 JP 2009222975**

(43) Date of publication of application:
**08.08.2012 Bulletin 2012/32**

(73) Proprietor: **Terumo Kabushiki Kaisha**
**Tokyo 151-0072 (JP)**

(72) Inventors:
• **YATABE Teruyuki**
**Ashigarakami-gun**
**Kanagawa 259-0151 (JP)**

• **NIIMI Taishi**
**Ashigarakami-gun**
**Kanagawa 259-0151 (JP)**

(74) Representative: **TBK**
**Bavariaring 4-6**
**80336 München (DE)**

(56) References cited:
**WO-A1-2004/081055     WO-A1-2005/087289**
**WO-A2-00/27887        JP-A- 2006 271 716**
**JP-A- 2006 334 007     JP-A- 2007 075 540**
**JP-A- 2007 236 657     JP-A- 2008 029 824**

## Description

Technical Field

The present invention relates to an active esterified polysaccharide and a method for producing the same.

Background Art

It is suggested in several literatures that a polysaccharide derivative which has a crosslinkable group introduced into a polysaccharide side chain having high biocompatability is suitable as a biocompatible material. Among them, an active esterified polysaccharide in which a carboxy group introduced into a polysaccharide side chain is esterified with an electrophilic group and the ester group dissociates when contacted with an active hydrogen-containing group to yield a carboxy group for mediating crosslinking has a self-crosslinking property and is particularly useful as various biocompatible materials such as an anti-adhesion material, a hemostatic material, and medical adhesives (see,

Patent Literature 1 or the like).

The active ester group is generally an imide ester group, and in particular, a succinimide ester group can be mentioned as a representative example. Regarding the active esterification of polysaccharides with a hyaluronic acid which has a carboxy group in the molecule, a method of synthesizing succinimide active ester with hyaluronic acid based on a reaction between hyaluronic acid tetrabutyl ammonium salt and N-hydroxy succinimide diphenyl acid salt is reported (see, Non-Patent Literature 1). However, according to a conventional method, a carboxy group needs to be introduced first into a side chain of a polysaccharide having no carboxy group in the molecule to give an acid type polysaccharide and the carboxy group and an N-hydroxy imide are condensed by dehydration to form an ester. The active esterified polysaccharide produced by the method is crystallized with a poor solvent and dried under reduced pressure to form a powder, which is dissolved in water at the time of use.

Citation List

Patents

Patent 1: International Publication WO 2004/81055 Non-Patent Literature
Non-Patent Literature 1: Y. Luo, et al., Bioconjugate Chem. 2001, 12, 1085-1088

Summary of Invention

Problem to be solved

Regarding commercialization of active esterified polysaccharides that are highly useful as a biocompatible material, there is a problem in that, when active esterified polysaccharides prepared as a dry product are dissolved in water, an an insoluble material such as a coagulant material is formed. Although a product containing an insoluble matter is a problem which has not been reported so far on an experimental level, it is a problem related to product quality that is faced in commercial volume production and also a problem related to production efficiency. For such reasons, active esterified polysaccharides which have stable quality so as not to yield any insoluble material when dissolved in water and a method for stable production of active esterified polysaccharides even if the large-scale volume production is desired.

Means for solving the Problem

After extensive studies to solve the problems described above, inventors of the invention found that the problem of having an insoluble material when a dry product is dissolved in water can be solved by bringing a reaction solution obtained after the completion of an esterification reaction into contact with a polyvalent carboxylic acid. It was also confirmed that the average molecular weight (Mw) increase of a target compound over time period of final drying process and storage could be inhibited. Consequently, large scale volume production can be realized, and the invention is completed accordingly.
Further, it was found during the studies that active esterified polysaccharides obtained according to a conventional production method show, when a water-insoluble material is formed in a dry product thereof, a shoulder is recognized in a high molecular weight side or a broadened shoulder is recognized according to the GPC measurement of the active esterified polysaccharides, indicating the production of a high molecular weight component. According to IR spectrum, it is speculated that the shoulder fraction at a high molecular weight side is due to a hydrogen bonding product of active esterified polysaccharides. However, it cannot be necessarily said that the contribution of a component having high molecular weight to a change in average molecular weight (Mw) is high, and therefore, it is cannot be also considered that the Mw increases significantly according to generation of an insoluble material. Further, although it cannot be said that an insoluble material is always formed in accordance with a certain increase of Mw, the active esterified polysaccharide obtained by a conventional method is recognized to have a tendency that its Mw increases during drying under reduced pressure and storage over time. It is also found that the rate of Mw change over time is scattered. It is also found that the Mw increase during drying under reduced pressure is more significant than that of storage and the Mw increase during storage can be inhibited by inhibiting Mw increase during drying under reduced pressure. Therefore, the evaluation of Mw during drying under reduced pressure can be employed as an indicator for evaluating product stability including storage stability.

Meanwhile, regarding the production method described above, the active esterified polysaccharide which is brought into contact with a polyvalent carboxylic acid can stably inhibit the production of an insoluble material when a final dry product is dissolve in water, and therefore an occurrence or a broadening of a strong shoulder at a high molecular weight side is not seen for the peaks obtained by GPC measurement. It is also confirmed that an effect of inhibiting Mw increase over time during drying under reduced pressure is obtained. The reason why the polyvalent carboxylic acid used for the production process of the invention hardly remains in a final dry product, forms no insoluble material when the dry product is dissolved in water, and inhibits an occurrence of a high molecular weight component over time during drying under reduced pressure or an increase in Mw remains unclear. However, it is nevertheless shown that a stable dry product can be obtained with good reproducibility by contact with a polyvalent carboxylic acid during a production process and it guarantees good water solubility of a dry product. Thus, the invention as follows is provided.

The invention relates to a method for producing active esterified polysaccharides involving reacting a carboxy group of an acid type polysaccharide with an agent for introducing an electrophilic group, bringing the generated the active esterified polysaccharide into contact with a polyvalent carboxylic acid, and then precipitating and collecting the resulting active esterified polysaccharide.

The active esterified polysaccharide obtained after the precipitation and collection is generally subjected to drying under reduced pressure.

The invention further provides active esterified polysaccharides that are obtained by the method described above as defined in claim 9.


Advantageous Effects of Invention

According to the invention, an effect of inhibiting an increase in molecular weight of a target compound over time during final drying process is obtained. Since an active esterified polysaccharide (dry product) which does not generate an insoluble material can be stably produced even in an industrial scale, the active esterified polysaccharide with stable quality can be provided.


Description of Embodiments

Herein below, the invention is specifically explained in view of the production method.

Herein, a polysaccharide having a carboxy group is referred to as an "acid type polysaccharide."

According to the invention, a carboxy group of an acid type polysaccharide and an agent for introducing an electrophilic group are subjected to an esterification reaction, the generated active esterified polysaccharide is brought into contact with a polyvalent carboxylic acid, and then the resulting active esterified polysaccharide is precipitated and collected.


<Acid type polysaccharide>

The polysaccharide constituting the main skeleton of the acid type polysaccharide is not specifically limited so long as it has two or more units of monosaccharide structure in the main skeleton. Examples of the polysaccharides include those formed through a covalent bond between monosaccharides such as arabinose, ribose, xylose, glucose, mannose, galactose, fructose, sorbose, rhamnose, fucose, or ribodesose; disaccharides such as trehalose, sucrose, maltose, cellobiose, gentiobiose, lactose, or melibiose; and tri- or higher polysaccharides such as raffinose, gentianose, merezitose, or stachyose, and; those having further functional groups introduced thereinto. In the invention, such polysaccharide may be naturally occurring ones or artificially synthesized ones.

Molecular weight of the polysaccharide is not limited. Preferably, the polysaccharide has an average molecular weight of 5 to 2500 kDa, which corresponds to that of a polysaccharide composed of tens to thousands of monosaccharides, disaccharides, or tri- or higher polysaccharides mentioned above. Such a polysaccharide can give a gel which enables easy adjustment of hardness after crosslinking of an active esterified polysaccharide and it also enables easy introduction of more than one active ester group and active hydrogen-containing group for mediating crosslinking into one molecular chain. A preferable polysaccharide is the one which has a Mw of 10 to 1000 kDa.

The "carboxy group" in the acid type polysaccharide denotes a carboxylic acid (-COOH) group and a carboxyalkyl (-RCOOH) group. Examples of the -RCOOH group include a carboxymethyl group, a carboxyethyl group, a carboxypropyl group, a carboxyisopropyl group, and a carboxybutyl group.

The acid type polysaccharide is not specifically limited so long as it is an acid type in the precursor state of an active esterified polysaccharide. It may be a native acid type polysaccharide having a carboxylic group. It may also be an acid type polysaccharide which has a carboxy group introduced thereinto. The polysaccharide to which a carboxy group is introduced may be a native acid type polysaccharide or a polysaccharide which does not have a carboxy group.

The native acid type polysaccharide which originally has a carboxy group is not specifically limited, and examples thereof include pectin containing glacturonic acid or hyaluronic acid.

Examples of the polysaccharide which does not have a carboxy group include, although not specifically limited, dextran, pullulan, and dextrin.

Dextran is used as a blood plasma substitute, and it is commercially available as a product name of "Dextran T fractions" (manufactured by Amersham Biosciences Corp.).

Pullulan is used as a medical adjuvant including an oral medication. Preferable one is substantially free of biological contamination such as endotoxin. Pullulan is commercially available as a product name of "Pullulan PI-20" from Hayashibara Co., Ltd.

Dextrin is a hydrolyzed product of starch and a mixture of glucose polymer having different molecular chain length. The glucose unit in dextrin is mainly a $\alpha$-1, 4 bond, and it generally contains a $\alpha$-1, 6 bond at certain ratio. In the invention, type of starch as a starting material for dextrin is not specifically limited, and therefore the presence rate of a $\alpha$-1, 6 bond is not particularly limited, either.

Dextrin used in the invention typically is dextrin having Mw of 10 to 200 kDa considering easy obtainability, physical property at the time of use, easy handlability, and film formability, or the like.

According to the invention, any polysaccharide that is now commercially available can be used. From the viewpoint of stability, the polysaccharide which is proven to be useful for medical use is a polysaccharide that can be very suitably used for the invention.

Among those described above, dextrin is a particularly preferable polysaccharide from the viewpoint that non-suitability for adaptation in living body is not reported as no anaphylactic shock has been reported therefor and it has been also used for peritoneal dialysis.

Further, the acid type polysaccharide is preferably a carboxymethylated polysaccharide having a carboxy group.

Further, in the invention, the carboxy group in an acid type polysaccharide is preferably "non-salt" type in which no salt is coordinated thereto, and, it is desirable that the finally obtained active esterified polysaccharide is not in the form of salt. As used herein, the term "salt" includes inorganic salt of alkali metal or alkaline earth metal, quaternary amine salt such as tetrabutyl ammonium (TBA), and halogen salt such as chloromethyl pyridium iodide. As used herein, the term "non-salt" type means that the derivative does not have such coordinated "salt". The term "not in the form of salt" means that the derivative does not contain such a salt.

The carboxylation reaction of polysaccharide may be accomplished by any known oxidation reaction without specific restrictions. For preparing a carboxylic acid by oxidation of a hydroxy group contained in polysaccharide, type of carboxylation reaction includes, but is not specifically limited, oxidation with dinitrogen tetraoxide, oxidation with fumed sulfuric acid, oxidation with phosphoric acid, oxidation with nitric acid, and oxidation with hydrogen peroxide. Each oxidation with the reagent will be accomplished by selecting the reaction generally known in the art. The condition of reaction may be properly established depending on the amount of carboxy group to be introduced. For example, an acid type polysaccharide containing a carboxylic acid may be prepared through the oxidation of the hydroxy group in a polysaccharide by suspending a polysaccharide as a starting material in chloroform or carbon tetrachloride and adding a dinitrogen tetraoxide thereto.

Additionally, a carboxylalkylation reaction may be accomplished by any known carboxyalkylation reaction of polysaccharide, but is not specifically limited, typically in the case of carboxymethylation, may be applied of the reaction which uses monochloroacetic acid after alkalifying of polysaccharide. The condition of reaction may be properly established depending on the amount of carboxymethyl group to be introduced. In the invention, the polysaccharide is generally subjected to the reaction in the form of an aqueous solution.

The acid type polysaccharide having a carboxy group introduced thereto is generally precipitated by using a poor solvent (e.g., alcohol) followed by drying under reduced pressure.

In the invention, it is possible to employ either the carboxylation or the carboxyalkylation mentioned above as a method for introducing a carboxy group into a polysaccharide, but is not limited, carboxyalkylation, especially carboxymethylation is suitable because it does not appreciably reduce the molecular weight of polysaccharide after introduction of the carboxy group and it allows easy control over the amount of the carboxy group to be introduced. Herein below, the carboxymethyl group may be also referred to as "CM-."

The acid type polysaccharide to be used for active esterification should be the one which contains carboxy group (regarded as one molecule) in an amount of usually 0. 1 to 5 mmol/g, preferably 0.4 to 3 mmol/g, more preferably 0.5 to 2 mmol/g (on dry basis) per one gram of dry mass of the polysaccharide. If the ratio of carboxy group is less than 0.1 mmol/g, it is often the case that there will be an insufficient number of active ester group for forming a crosslinking point derived therefrom. On the other hand, if the ratio of carboxy group is more than 5 mmol/g, the active esterified polysaccharide (not crosslinked) is poorly soluble in a water-containing solvent. Further, the amount of carboxy group in an acid type polysaccharide can be quantified by acid-base back titration which uses phenolphthalein as an indicator.

It is acceptable that a carboxy group which is not transformed into an active ester group remains in the final active esterified polysaccharide of the invention. Thus, the amount of carboxy group in the final active esterified polysaccharide is a sum of the active ester group and the carboxy group not transformed into an active ester group in the final active esterified polysaccharide.

<Active esterification>

An active ester group is formed by reacting the acid type polysaccharide and an agent for introducing an electrophilic group. The acid type polysaccharide used for the esterification may be either a single type or a combination of two or more types.

The active ester group is a carboxy group in which an electrophilic group that is stronger than a common alcohol is bonded to the carbonyl group, and the ester bond dissociates in water in the presence of an alkali. As an agent for introducing electrophilic group forming an active ester group, N-hydroxyamine-based compound that can be obtained at low cost is commonly used. Specific examples thereof include N-hydroxysuccinimide, N-hydroxynorbornene-2,3-dicarboxylic imide, ethyl ester of 2-hydroxyimino-2-cyanoacetic acid, 2-hydroxyimino-2-cyanoacetic amide, N-hydroxypiperidine, N-hydroxyphthalimide, N-hydroxyimidazole, and N-hydroxymaleimide. The compound may be used in a combination of two or more.

Of these examples, N-hydroxyimide, in particular N-hydroxysuccinimide (herein below, described as NHS) is desirable because it is commercially available and has been widely used in the field of peptide synthesis.

The acid type polysaccharide is provided to an esterification reaction in the form of a solution in an aprotic polar solvent. The "aprotic polar solvent" denotes a polar solvent that does not have proton capable of forming hydrogen bond with a nucleophilic agent having an electrically positive functional group. The aprotic polar solvent that can be used for the method of the invention is not specifically limited; it includes, for example, dimethyl sulfoxide (DMSO), N,N-dimethyl formamide, N-methyl-2-pyrolidone, N,N-dimethyl acetamide, and 1,3-dimethyl-2-imidazolidinone. Of these examples, DMSO may be used preferably because, as a solvent, it has a good property of dissolving polysaccharide.

The preferred "non-salt" acid type polysaccharide can be dissolved in a solvent by heating it at the temperature of about 20°C to 120°C.

The esterification reaction between an acid type polysaccharide and an agent for introducing an electrophilic group is generally carried out in the presence of a dehydrating-condensing agent.

The dehydrating-condensing agent is the one that withdraws one water molecule, dehydrates in other word, which occurs by condensation between the carboxy group and the agent for introducing an electrophilic group, thereby forming an ester linkage between them. The dehydrating-condensing agent is not specifically limited; it includes, for example, 1-ethyl-3-dimethylaminopropylcarbodiimide hydrochloride salt (EDC) and 1-cyclohexyl-(2-morpholinyl-4-ethyl)-carbodiimide • meso-p-toluenesulfonate. Of these examples, 1-ethyl-3-dimethylaminopropylcarbodiimide hydrochloride salt (EDC) is desirable because it is commercially available and has been widely used in the field of peptide synthesis.

In order to control the amount of active ester group in the final active esterified polysaccharide, it is possible to adjust the mixing amounts of the agent for introducing an electrophilic group and the dehydrating condensation agent.

More specifically, the addition condition that the ratio ($Z/X$) of the number of moles ($Z$ mmol) of the dehydrating condensation agent to the number of moles ($X$ mmol) of total carboxy group in the acid type polysaccharide satisfies $0.1 < Z/X < 50$ at the reaction temperature described above. When the $Z/X$ is less than 0.1, the addition amount of a dehydrating-condensing agent is small, and therefore reaction efficiency is low and it is difficult to achieve a desired introducing ratio of an active ester group. On the other hand, when $Z/X$ is more than 50, the addition amount of a dehydrating-condensing agent is large, and therefore introducing ratio of an active ester group is high but the active esterified polysaccharide obtained cannot be easily dissolved in water.

Further, the ratio of the number of moles ($Y$ mmol) of the agent for introducing an electrophilic group to the number of moles ($X$ mmol) of total carboxy group in the acid type polysaccharide is not specifically limited when more than a reaction amount according to the introducing ratio of an active ester group is added. However, it is preferably a condition which satisfies $0.1 < Y/X < 100$. In general, the agent for introducing an electrophilic group is used in 2 to 30 molar excess amount relative to one mole of total carboxy group in the polysaccharide.

The reaction temperature for esterification process is not specifically limited. However, it is preferably 0°C to 70°C and more preferably 20°C to 40°C. The reaction time varies depending on the reaction temperature. It is usually 1 to 48 hours and preferably 12 to 24 hours.

<Acid treatment>

Conventionally, an active esterified polysaccharide produced by the esterification reaction is collected by crystallization. However, according to the invention, the active esterified polysaccharide is brought into contact with a polyvalent carboxylic acid before crystallization.

The polyvalent carboxylic acid may be a di- or higher carboxylic acid. In general, it is selected from dicarboxylic acid and tricarboxylic acid that can be easily obtained. In particular, succinic acid and malic acid as a dicarboxylic acid or citric acid as a tricarboxylic acid that are known to be useful as a medical adjuvant are preferable. It may be used in a combination of two or more.

Use amount of the polyvalent carboxylic acid is generally 1 or more equivalent, or 1 to 10 equivalents in terms of an acid equivalent relative to 1 mole of an added agent for introducing an electrophilic group. When it is within the range, a dry product of active esterified polysaccharide which does not generate any insoluble material in water can be finally obtained. Preferably, it is 1. 5 equivalents or more. When it is too high, there is a tendency that the rate of average molecular weight Mw change during drying process increases. In this connection, it is 9 equivalents or less and more preferably 7.5 equivalents or less. It is typically 3 equivalents.

For contacting an active esterified polysaccharide with a polyvalent carboxylic acid, it is specifically preferable that the polyvalent carboxylic acid is added to a reaction solution obtained after esterification reaction followed by mixing. The mixing time is not specifically limited. In general, it is between 1 to 60 minutes.

<Post treatment>

After the contact described above, the active esterified polysaccharide is precipitated in the same manner as before, and recovered. In general, the reaction solution is added to an excess amount of a poor solvent such as alcohol and acetone for precipitation, and then collected by an appropriate method such as decantation, centrifuge, and filtration. It is preferable that purification is performed by repeating one or more times the washing of the precipitates with a poor solvent. According to filtration and/or washing during this precipitation · purification process, the polyvalent carboxylic acid added to a reaction system is removed with a unreacted agent for introducing an electrophilic group, a dehydrating condensing agent, and side products of the reaction. As a result, the polyvalent carboxylic acid is substantially not present in final active esterified polysaccharide.

According to the invention, average molecular weight Mw of the active esterified polysaccharide (initial) after the process is almost the same as that of the acid type polysaccharide before esterification.

<Drying>

The active esterified polysaccharide is unstable in water, and therefore the active esterified polysaccharide obtained after precipitation · purification process is generally dried under reduced pressure. Drying under reduced pressure is typically carried out at the temperature of 45°C or less for at least one hour, preferably for four hours.

The active esterified polysaccharide obtained according to the production process of the invention shows inhibited increase in molecular weight over time during drying under reduced pressure. When the rate of the average molecular weight (Mw) change is measured during the drying under reduced pressure, it is preferable that the rate of the molecular weight (Mw) change over time of NHS dextrin, which is produced as one embodiment of the invention is less than 1.8 during drying under reduced pressure. More preferably, it is 1.4 or less. Further, the active esterified polysaccharide that is obtained by a conventional method generally shows at least 1.8% of molecular weight Mw increase over time during drying under reduced pressure.

The dried active esterified polysaccharide is transformed into powder by degradation or pulverization, if necessary. Further, it can be adjusted to have any particle size distribution by controlling the particle diameter, for example, by sieving or the like, if necessary. Although it is not specifically limited, powder having average particle diameter of several tens of nanometers to several hundreds of micrometers is preferable.

<Active esterified polysaccharide>

As a crosslinkable material, the active esterified polysaccharide (dry product) that is obtained according to the method described above is generally dissolved in water and used, and it does not form any insoluble material such as lumps.

The active esterified polysaccharide according to the invention has at least one active ester group in the molecule. However, to form a crosslinked matrix, it generally has two or more active ester groups in the molecule. A polysaccharide derived from a natural material is often a mixture of molecules with different molecular weight, and therefore, it would be appropriate that the content ratio of the active ester group is expressed by the amount of an active ester group per one gram of dry mass of the polysaccharide. Although it may vary depending on the purpose of use, the amount of active ester group per one gram of dry mass of the active esterified polysaccharide is generally 0.1 to 5 mmol/g, and preferably 0.1 to 2 mmol/g.

The active ester group introducing ratio (%) can be represented by multiplying by 100 a ratio (AE/TC) of the molar amount of the active ester group in the resulting polysaccharide derivative (AE) to the total carboxy group contained in the acid type polysaccharide (TC). The active ester group-introducing ratio can be determined by, for example, the method described in Biochemistry vol. 14, No. 7 (1975), pp. 1535 to 1541. In particular, when the active ester group introducing ratio is less than 100%, the polysaccharide derivative includes a residual carboxy group that is not esterified in addition to an active ester group.

Preferred examples of the active esterified polysaccharide according to the invention include NHS dextrin. Particularly preferred examples include NHS dextrin in which CM dextrin having dextrin Mw of 10 to 200 kDa and CM group introduction amount of 0.5 to 0.9 mmol/g is modified by active esterification to have NHS group introduction amount of 0.5 to 0.7 mmol/g.

Further, the active esterified polysaccharide generally has a hydroxy group in the polysaccharide skeleton molecule even after introduction of an active ester group, and therefore has an active hydrogen-containing group in the molecule. However, the active hydrogen-containing group in the molecule is not limited thereto, and if necessary, it may further contain an active hydrogen-containing group introduced to the molecule. In such case, the active hydrogen-containing group contained in an active esterified polysaccharide may be a single type or two or more types. Examples of the active hydrogen-containing group include a hydroxy group, a primary or a secondary amino group, and a thiol group.

In addition to the above-mentioned active ester group and active hydrogen-containing group, the active esterified polysaccharide may contain any known elements, atomic groups, or other functional groups within the range that the characteristics of the invention are not impaired. Specific examples of the functional group include halogen elements such as fluorine, chlorine, bromine, or iodine; a carboxy group; a carboxyalkyl group such as a carboxymethyl group, a carboxyethyl group, a carboxypropyl group, or a carboxyisoproyl group; a silyl group, an alkylenesilyl group, an alkoxysilyl group, and a phosphate group. These functional groups may be used either singly or in a combination of two or more.

The active esterified polysaccharide of the invention essentially contains a hydroxy group, i.e., an active hydrogen-containing group, in a polysaccharide molecule, and therefore it has a self-crosslinking property enabling formation of a crosslinking structure within a molecular chain or between molecular chains under alkaline condition even without adding a crosslinking agent. As used herein, the term "alkaline condition" means a condition in which water with pH of more than 7 is present.

Further, when the active esterified polysaccharide is applied on surface of a living body, it reacts with an active hydrogen-containing group present on surface of a living body to exhibit adhesiveness on surface of a living body. When used as a material for medical treatment, the temperature for crosslinking reaction is generally a temperature of a living body and its contribution to a crosslinking reaction is substantially not so high. However, the active esterified polysaccharide of the invention can form a crosslinked matrix at the temperature under alkaline condition.

Herein below, the invention is described more specifically in view of the examples. However, it is evident that the invention is not limited to them.

Examples

(Example 1) Preparation of NHS dextrin

1. Preparation of acid type polysaccharide CM dextrin

10 g of dextrin (manufactured by Meito Sangyo Co., Ltd. SD# 100, Mw 15 kDa) was dissolved in 62.5 g of pure water in a 500 mL flask until no lump or cloudiness is obtained. 62.5 g of 36% by weight of aqueous solution of NaOH was added thereto and stirred at room temperature for 90 minutes. Thereafter, an aqueous solution of chloroacetic acid which is prepared by adding distilled water to 10.31 g (109.1 mmol) of chloroacetic acid until 75 g of the solution was added thereto and reacted for 6 hours at 60°C. After cooling to room temperature, 80 mL of 20% HCl aqueous solution was added to give a reaction solution containing CM dextrin.

Subsequently, to a 5 L beaker containing 4450 mL of ethanol and 180 mL of water, the entire volume of the reaction solution obtained from above was added thereto under stirring. The precipitates were collected by filtration and washed with 2 L of 90% ethanol aqueous solution followed by 2 L ethanol. They were dried at room temperature for 24 hours under reduced pressure to give CM dextrin.

The amount of CM group in the CM dextrin obtained from described below was 0.8 mmol/g.

Quantification of carboxy group in acid type polysaccharide: 0.2 g (A g) of the acid type polysaccharide (CM dextrin) was weighed, and added to a mixed solution composed of 20 mL of aqueous solution of sodium hydroxide (0.1 mol/L) and 10 mL of aqueous solution of methanol (80 vol%), followed by stirring at 25°C for 3 hours. Drops of 1.0% phenolphthalein solution in 90 vol% ethanol were added to the solution and an acid-base back titration was performed by using 0.05 mol/L sulfuric acid, and the use amount of 0.05 mol/L sulfuric acid ($V_1$ mL) was determined. From a blank test in which no acid type polysaccharide is added, the use amount of 0.05 mol/L sulfuric acid ($V_0$ mL) was also determined. The amount (B mmol/g) of carboxy group in the acid type polysaccharide was calculated from the following equation (1). Incidentally, both the 0.1 mol/L aqueous solution of sodium hydroxide and the 0.05 mol/L sulfuric acid have a titer of 1.00.

$$B = (V_0 - V_1) \times 0.1 \div A \quad ... \quad (1)$$

A: mass of acid type polysaccharide (g)
B: amount of carboxy group (mmol/g)

2. Active esterification of CM dextrin (NHS introducing ratio of 75%)

10 g of the CM dextrin obtained from above (i.e., 8 mmol in an acid group amount) and 300 g of DMSO were added to a 1 L flask and completely dissolved by stirring at room temperature. 12 g (104 mmol) of N-hydroxysuccinimide (NHS) (manufactured by Wako Pure Chemical Industries, Ltd.) was added thereto and completely dissolved by stirring at room temperature. Subsequently, 20.1 g (104 mmol) of 1-ethyl-3-dimethylaminopropylcarbodiimide hydrochloride salt (EDC) (manufactured by Wako Pure Chemical Industries, Ltd.) was added thereto and completely dissolved by stirring at room temperature. By stirring for 16 hours at 23°C, the reaction solution 1 was obtained.

3. Acid treatment

The reaction solution 1 was mixed with citric acid in an amount listed in Table 1 for 20 minutes to give the reaction solution 2.

4. Collection

To a 3 L beaker containing 2 L of methanol/acetone = 1 : 4 (v/v), the entire amount of the reaction solution 2 was added under stirring. After keeping it for a while, the upper solution was removed by decantation and 800 mL of methanol/acetone = 1 : 4 (v/v) was added thereto. The resultant was filtered under suction by using a No. 5A filter paper with $\phi$ 95 mm, Kiriyama Rohto, and the precipitates were collected by filtration. The filtrate on the Rohto was washed with 1600 mL of methanol/acetone = 1 : 4 (v/v).

5. Drying

The filtrate was dried under reduced pressure for 24 hours at 40°C. Average molecular weight Mw of the dried NHS dextrin was measured by GPC at the time points of 4 hours, 8 hours, and 24 hours. As a result, the rate of change over time was obtained. The rate of change (%) was given as a slope when the time - Mw plot is obtained as a straight line. Further, the dissolution test was carried out for the dry product at each drying time. The results obtained are given in Table 1.

According to the gelling test, the dry NHS dextrin product was confirmed to have gellation.

<Conditions for measuring average molecular weight Mw>

Reagent: RO water, sodium nitrate
Preparation of eluent: 8.49 g of sodium nitrate was weighed and diluted in 2 L of RO water to give 50 mM aqueous solution of sodium nitrate.
Preparation of sample solution: 10 mg of sample was weighed and diluted in 10 mL of eluent. The solution was mixed by inverting 10 times and kept for two hours. The solution obtained was passed through a membrane filter, and prepared in a vial for measurement.

Condition for HPLC measurement:

Apparatus for measurement: ECOSEC HPLC-8320 GPC manufactured by Tosoh Corporation
Column: two columns of Shodex $\phi$ 8.0 x 300 mm
Eluent: 50 mM aqueous solution of sodium nitrate
Flow rate: 1.0 mL/min
Column temperature: 40°C
Detector: RI
Injection amount: 100 $\mu$L

<Dissolution test>

0.27 g of a sample was weighed in a glass test tube (15 mL), added with 0.54 mL of RO water, and vigorously stirred for 3 minutes. After that, the appearance of the solution was observed to determine the presence or absence of an insoluble material.

<Gellation test>

0.27 g of a sample was weighed in a glass test tube (15 mL), added with 0. 54 mL of RO water, and vigorously stirred for 3 minutes. After that, 0.18 mL of 0.5 M aqueous solution of sodium carbonate/sodium hydrogen carbonate was added thereto, vigorously stirred for 10 seconds, and the test tube was inverted. If no flow of the mixture is recognized, it was determined that a gel is formed.

[Table 1]

| | Average molecular weight Mw/kDa | | | |
| | Dissolution property | | | |
| Acid equivalent Relative to NHS | 4h | 8h | 24h | Rate of change over time (%) |
| --- | --- | --- | --- | --- |
| 0.8 | 137 | - | - | - |
| | Transparent | insoluble | insoluble | |
| 1.5 | 75 | - | 86 | 0.8 |
| | Transparent | Transparent | Transparent | |
| 3 | 63 | 66 | 66 | 0.2 |
| | Transparent | Transparent | Transparent | |
| 4.5 | 64 | - | 79 | 1.2 |
| | Transparent | Transparent | Transparent | |
| 6 | 61 | - | 66 | 0.4 |
| | Transparent | Transparent | Transparent | |
| 7.5 | 73 | 77 | 93 | 1.4 |
| | Transparent | Transparent | Transparent | |
| 9.6 | 58 | 80 | 90 | 2.2 |
| | Transparent | Transparent | Transparent | |

From the above, it was found that the rate of Mw change is low and distribution is small particularly with 1.5 to 7.5 equivalents.

(Example 2)

The NHS dextrin was prepared in the same manner as Example 1 except that 3 equivalents of succinic acid are used instead of citric acid in '3. Acid treatment' of Example 1. The results obtained by carrying out the test in the same manner as Example 1 are listed in Table 2. According to the gellation test, gellation was confirmed.

(Example 3)

The NHS dextrin was prepared in the same manner as Example 1 except that 3 equivalents of malic acid are used instead of citric acid in '3. Acid treatment' of Example 1. The results obtained by carrying out the test in the same manner as Example 1 are listed in Table 2. According to the gellation test, gellation was confirmed.

(Reference example 1)

The NHS dextrin was prepared in the same manner as Example 1 except that 3 equivalents of three types of monocarboxylic acid that are given in Table 2 are used instead of citric acid in '3. Acid treatment' of Example 1. The results obtained by carrying out the test in the same manner as Example 1 are listed in Table 2.

(Reference example 2)

The NHS dextrin was prepared in the same manner as Example 1 except that 3 equivalents of hydrochloric acid are used instead of citric acid in '3. Acid treatment' of Example 1. The results obtained by carrying out the test in the same manner as Example 1 are listed in Table 2.

(Comparative example 1)

Four control examples are given in which NHS dextrin was prepared in the same manner as Example 1 except that '3. Acid treatment' of Example 1 is not provided. The results obtained by carrying out the test in the same manner as Example 1 are listed in Table 2.

[Table 2]

| | | | Acid | Acid equivalent relative to NHS | Average molecular weight Mw/kDa | | | Rate of change over time % |
|---|---|---|---|---|---|---|---|---|
| | | | | | Dissolution property | | | |
| | | | | | 4h | 8h | 24h | |
| Ex.1 | Tricarboxylic acid | | Citric acid | 3 | 63 | 66 | 66 | 0.2 |
| | | | | | TP | TP | TP | |
| Ex.2 | Dicarboxylic acid | | Succinic acid | 3 | 62 | - | 69 | 0.7 |
| | | | | | TP | TP | TP | |
| Ex.3 | | | Malic acid | 3 | 63 | 63 | 68 | 0.4 |
| | | | | | TP | TP | TP | |
| Ref. 1 | Monocarboxylic acid | | Acetic acid | 3 | 90 | 103 | 126 | 2.0 |
| | | | | | TP | TP | TP | |
| | | | Ascorbic acid | 3 | 85 | 108 | - | 9.3 |
| | | | | | TP | TP | IS | |
| | | | Lactic acid | 3 | 101 | - | - | - |
| | | | | | TP | IS | IS | |
| Ref. 2 | pH adjustment | | Hydrochlo -ric acid | 3 | 76 | - | - | - |
| | | | | | TP | IS | IS | |

(continued)

|  |  | Acid | Acid equivalent relative to NHS | Average molecular weight Mw/kDa | | | Rate of change over time % |
|---|---|---|---|---|---|---|---|
|  |  |  |  | Dissolution property | | | |
|  |  |  |  | 4h | 8h | 24h | |
| Com. Ex1 | control | - | - | 87 | 89 | 114 | 1.8 |
|  |  |  |  | TP | TP | TP | |
|  |  |  |  | 96 | - | 115 | 3.0 |
|  |  |  |  | TP | TP | TP | |
|  |  |  |  | 136 | - | - | - |
|  |  |  |  | TP | IS | IS | |
|  |  |  |  | - | - | - | - |
|  |  |  |  | IS | IS | IS | |

EX=Example
TP= Transparent
IS= Insoluble
Com.Ex= comparative Example

Control

In Table 2, an example of using 3 equivalents of citric acid of Example 1 is also described.

The Comparative example 1 (Control) showed no reproducibility in dissolution property and Mw tends to increase essentially. However, rate of Mw change is scattered, and therefore homogeneous product is not stably obtained. Further, when a monocarboxylic acid or hydrochloric acid is used, rate of Mw change was big or an insoluble material was formed, and therefore proved to be unstable.

**Claims**

1. A method for producing active esterified polysaccharides comprising subjecting a carboxy group of an acid type polysaccharide and an agent for introducing an electrophilic group to an esterification reaction, bringing the generated active esterified polysaccharides into contact with a polyvalent carboxylic acid, and then precipitating and collecting the resulting active esterified polysaccharides.

2. The method according to Claim 1, wherein the active esterified polysaccharide obtained after precipitating and collecting are dried under reduced pressure.

3. The method according to Claim 1 or 2, wherein the polyvalent carboxylic acid is at least one selected from a dicarboxylic acid and a tricarboxylic acid.

4. The method according to any one of Claims 1 to 3, wherein the polyvalent carboxylic acid is at least one selected from a group consisting of succinic acid, malic acid, and citric acid.

5. The method according to any one of Claims 1 to 4, wherein the electrophilic compound is N-hydroxyimide.

6. The method according to any one of Claims 1 to 5, wherein the amount of the polyvalent carboxylic acid is 1.5 to 7.5 equivalents relative to the electrophilic compound.

7. The method according to any one of Claims 1 to 6, wherein the polysaccharide is dextrin.

8. The method according to any one of Claims 1 to 7, wherein the acid type polysaccharide is dextrin having a carboxy group introduced thereto and the electrophilic compound is N-hydroxysuccinimide.

9. Active esterified polysaccharides that are obtained by the method according to any one of Claims 1 to 8, wherein the amount of the polyvalent carboxylic acid used is 1 or more equivalent in terms of an acid equivalent relative to 1 mole of the added agent for introducing an electrophilic group.

**Patentansprüche**

1. Verfahren für die Herstellung aktiv veresterter Polysaccharide umfassend Unterziehen einer Carboxygruppe eines Polysaccharids vom Säuretyp und eines Mittels für das Einbringen einer elektrophilen Gruppe einer Veresterungsreaktion, in Kontakt Bringen der erzeugten aktiv veresterten Polysaccharide mit einer mehrwertigen Carbonsäure, und dann Ausfällen und Sammeln der resultierenden aktiv veresterten Polysaccharide.

2. Verfahren nach Anspruch 1, wobei die nach Ausfällen und Sammeln erhaltenen aktiv veresterten Polysaccharide unter reduziertem Druck getrocknet werden.

3. Verfahren nach Anspruch 1 oder 2, wobei die mehrwertige Carbonsäure wenigstens eine ausgewählt aus einer Dicarbonsäure und einer Tricarbonsäure ist.

4. Verfahren nach einem der Ansprüche 1 bis 3, wobei die mehrwertige Carbonsäure wenigstens eine ausgewählt aus der Gruppe bestehend aus Bernsteinsäure, Apfelsäure und Citronensäure ist.

5. Verfahren nach einem der Ansprüche 1 bis 4, wobei die elektrophile Verbindung N-Hydroxyimid ist.

6. Verfahren nach einem der Ansprüche 1 bis 5, wobei die Menge der mehrwertigen Carbonsäure 1,5 bis 7,5 Äquivalente relativ zu der elektrophilen Verbindung ist.

7. Verfahren nach einem der Ansprüche 1 bis 6, wobei das Polysaccharid Dextrin ist.

8. Verfahren nach einem der Ansprüche 1 bis 7, wobei das Polysaccharid vom Säuretyp Dextrin mit einer darin eingebrachten Carboxygruppe ist, und die elektrophile Verbindung N-Hydroxysuccinimid ist.

9. Aktiv veresterte Polysaccharide, die durch das Verfahren nach einem der Ansprüche 1 bis 8 erhalten werden, wobei die Menge der verwendeten mehrwertigen Carbonsäure 1 oder mehr Äquivalente in Bezug auf ein Säureäquivalent relativ zu 1 Mol des zugesetzten Mittels für das Einbringen einer elektrophilen Gruppe ist.

**Revendications**

1. Procédé de production de polysaccharides estérifiés actifs comprenant le fait de soumettre un groupe carboxy d'un polysaccharide de type acide et un agent servant à introduire un groupe électrophile à une réaction d'estérification, d'amener les polysaccharides estérifiés actifs générés en contact avec un acide carboxylique polyvalent, et ensuite de précipiter et collecter les polysaccharides estérifiés actifs résultants.

2. Procédé selon la revendication 1, dans lequel les polysaccharides estérifiés actifs obtenus après la précipitation et la collecte sont séchés sous pression réduite.

3. Procédé selon la revendication 1 ou 2, dans lequel l'acide carboxylique polyvalent est au moins un élément choisi parmi un acide dicarboxylique et un acide tricarboxylique.

4. Procédé selon l'une quelconque des revendications 1 à 3, dans lequel l'acide carboxylique polyvalent est au moins un élément choisi dans un groupe constitué de l'acide succinique, de l'acide malique, et de l'acide citrique.

5. Procédé selon l'une quelconque des revendications 1 à 4, dans lequel le composé électrophile est le N-hydroxyimide.

6. Procédé selon l'une quelconque des revendications 1 à 5, dans lequel la quantité de l'acide carboxylique polyvalent est de 1,5 à 7,5 équivalents par rapport au composé électrophile.

7. Procédé selon l'une quelconque des revendications 1 à 6, dans lequel le polysaccharide est la dextrine.

8. Procédé selon l'une quelconque des revendications 1 à 7, dans lequel le polysaccharide de type acide est la dextrine ayant un groupe carboxy qui y est introduit et le composé électrophile est le N-hydroxysuccinimide.

9. Polysaccharides estérifiés actifs qui sont obtenus par le procédé selon l'une quelconque des revendications 1 à 8, où la quantité de l'acide carboxylique polyvalent utilisé est égale à 1 ou plusieurs équivalent(s) en termes d'un équivalent acide par rapport à 1 mole de l'agent ajouté pour introduire un groupe électrophile.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 200481055 A

### Non-patent literature cited in the description

- **Y. LUO et al.** *Bioconjugate Chem.,* 2001, vol. 12, 1085-1088
- *Biochemistry,* 1975, vol. 14 (7), 1535-1541